(19) Europäisches Patentamt / European Patent Office / Office européen des brevets

(11) **EP 4 769 237 A1**

(12) **EUROPEAN PATENT APPLICATION**

(43) Date of publication:
**01.07.2026 Bulletin 2026/27**

(21) Application number: **24307322.8**

(22) Date of filing: **27.12.2024**

(51) International Patent Classification (IPC):
**G06N 10/20** (2022.01)    **G06N 10/40** (2022.01)
**G06N 10/70** (2022.01)

(52) Cooperative Patent Classification (CPC):
**G06N 10/40; G06N 10/20; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventor: **Gouzien, Elie**
**75015 Paris (FR)**

(74) Representative: **Atout PI Laplace**
**Immeuble Up On**
**25 Boulevard Romain Rolland**
**CS 40072**
**75685 Paris Cedex 14 (FR)**

(54) **A METHOD AND SYSTEM FOR PERFORMING A CONTROLLED-UNITARY GATE BETWEEN QUBITS**

(57) There is provided a method of performing a data-data controlled-unitary gate between a first data qubit as control in a first basis ($|e_0\rangle$, $|e_1\rangle$) and a second data qubit as target, and wherein the unitary gate of the controlled-unitary matrix is defined by a unitary matrix U, the method comprising the following operations: (i) providing the first data qubit in the first basis ($|e_0\rangle$, $|e_1\rangle$), the second data qubit, and an ancilla qubit, wherein each data qubit is connected to the ancilla qubit and wherein the first and second data qubits are not directly connected to each other, wherein the first data, second data, and ancilla qubits are all either (A) physical qubits each hosted in a respective physical mode of one or more physical resonators or (B) logical qubits each hosted by a plurality of physical qubits which are configured to perform an error correction code to encode the respective logical qubits; (ii) configuring the ancilla qubit to be able to perform a controlled-unitary gate with either of the first and second data qubits. The method further comprises the following operations: (iii) performing a first one-qubit state teleportation of the first data qubit to the ancilla qubit from the first basis ($|e_0\rangle$, $|e_1\rangle$) to a second basis ($|g_0\rangle$, $|g_1\rangle$) by: (a) preparing a two-qubit state entangling the first data qubit and the ancilla qubit, and (b) subsequently performing a measurement-based uncomputation of the first data qubit; (iv) performing an ancilla-data controlled-unitary gate between the ancilla qubit as control in the second basis ($|g_0\rangle$, $|g_1\rangle$) and the second data qubit as target; (vi) performing a second one-qubit state teleportation of the ancilla qubit to the first data qubit from the basis ($|g_0\rangle$, $|g_0\rangle$) to the basis ($|e_0\rangle$, $|e_1\rangle$) by: (a) preparing a second two-qubit state entangling the ancilla qubit and the first data qubit, and (b) subsequently performing a measurement-based uncomputation of the ancilla qubit. Operation (iv) is performed at any time before operation (vi)(b), operation (vi)(a) is performed after operation (iii)(b), and wherein (I) the unitary gate of the ancilla-data controlled-unitary gate is defined by the unitary matrix U, or (II) the unitary gate of the ancilla-data controlled-unitary gate is defined by another unitary matrix V and the method comprises a sequence of one or more gates that, in combination with the unitary V-gate of the ancilla-data controlled-unitary gate, performs the function of applying the unitary U-gate on the second data qubit. There is also provided a quantum system, a computer program product, and a computer-readable medium.

**300**

Prepare ancilla

**302**

Perform a one-qubit teleportation from the first (control) data on basis $(|e_0\rangle, |e_1\rangle)$ to the ancilla on basis $(|g_0\rangle, |g_1\rangle)$

**=**

**310**

Prepare a two-qubit state entangling first data and ancilla

**+**

**320**

Perform a measurement-based uncomputation of first data

**304**

Perform a controlled-U, in basis $(|g_0\rangle, |g_1\rangle)$, from the ancilla as control to the second (target) data

**306**

Prepare first data

**308**

Perform a one-qubit teleportation from the ancilla to the first (control) data ending in basis $(|e_0\rangle, |e_1\rangle)$

**=**

**350**

Prepapre a two-qubit state entangling the ancilla and the first data

**+**

**360**

Perform a measurement-based uncomputation of ancilla

**Fig. 3**

**Description**

The invention concerns a system for performing a quantum gate.

A. Background

The Applicant has been working for several years on the realization of quantum computers, and particularly quantum computers relying on cat qubits.

To provide a quantum computer, one must have a set of basic elements, such a data qubits which are linked into logical qubits by means of an error correcting code to provide fault tolerance, and the ability to perform quantum gates on the data qubits for the error correcting code, and on the logical qubits for the logical qubits.

The discovery of highly performant cat qubits by the Applicant has led to a radical progress toward providing a quantum computer. Indeed, the Applicant discovered a way to manufacture resonators for hosting a cat qubit in which the bit flip error time is orders of magnitude bigger than the phase flip error time, effectively reducing the error correction paradigm from two dimensions (phase flip and bit flip) to one dimension (phase flip only).

The Applicant has explored several architectures for providing a quantum circuit chip, involving various error correction schemes, whether linear (error correction code) or not (surface code, LDPC code, etc.).

In all cases, whether based on cat qubits or otherwise, a big challenge to scaling to a quantum circuit having a useful amount of logical qubits relates to the fact that providing logical qubits and performing quantum gates necessitates connecting data cat qubits and ancilla cat qubits together, and that it is extremely difficult to provide a great number of resonators used for hosting interconnected cat qubits without having the various radiations or modes interacting between them. Said otherwise: increasing the connectivity typically decreases the lifetime of the qubits.

In other words, it is one thing to provide a quantum circuit providing error correction for a single logical qubit, and an entirely different thing to provide the same for 10, 100 or several thousands of logical qubits.

Part of this scaling challenge lies in the ability to perform quantum gates, and particularly quantum gates between qubits hosting quantum data. For almost all multi-qubit quantum gates, mastering of a controlled unitary gate (colloquially termed controlled-U) is essential. A controlled-U is a two-qubit gate wherein the state of one qubit undergoes a known unitary operation (i.e. in the Bloch sphere representation, it is rotated around a known axis by a known amount) conditioned on the state of another qubit. For instance, in the context of cat qubit-based architectures, the use of the controlled NOT (CNOT) gates is ubiquitous.

Conventionally, performing a controlled-U gate, such as a CNOT gate, between a control qubit and a target qubit requires a physical link between these two qubits.

However, in the scaling context described above, these connections come in addition to the connections between the two or more data qubits which are used to encode a logical qubit and the one or more ancilla qubit which is used to detect the error syndrome of this logical qubit. This leads to circuits in which there is a very high degree of connectivity between all of the qubits, which is not desirable as explained above, not only in terms of manufacturability but also in terms of frequency crowding and noise management.

Moreover, even at the logical qubit level, it may be desirable to perform quantum gates between logical qubits which are spatially separated apart from each other, and therefore not necessarily connected together so as to be able to perform a direct CNOT therebetween. For instance, in so-called lattice surgery schemes, an ancilla or "routing" logical qubit may be required to facilitate the entanglement of quantum information between two spatially separated "data" logical qubits. This is described at least in Gouzien, Élie, et al. "Performance analysis of a repetition cat code architecture: Computing 256-bit elliptic curve logarithm in 9 hours with 126 133 cat qubits." Physical Review Letters 131.4 (2023): 040602..

The conventional way to perform a controlled-U between two non-directly-connected data qubits (whether at the physical or the logical level) is to simply cascade the appropriate controlled-U gates with an ancilla qubit connected to each of the data qubits. By non-directly-connected at the physical level, it means a physical controlled-U cannot be performed directly between the data qubits. By non-directly-connected at the logical level, it means a logical controlled-U cannot be performed with physical gates directly between the data qubits.

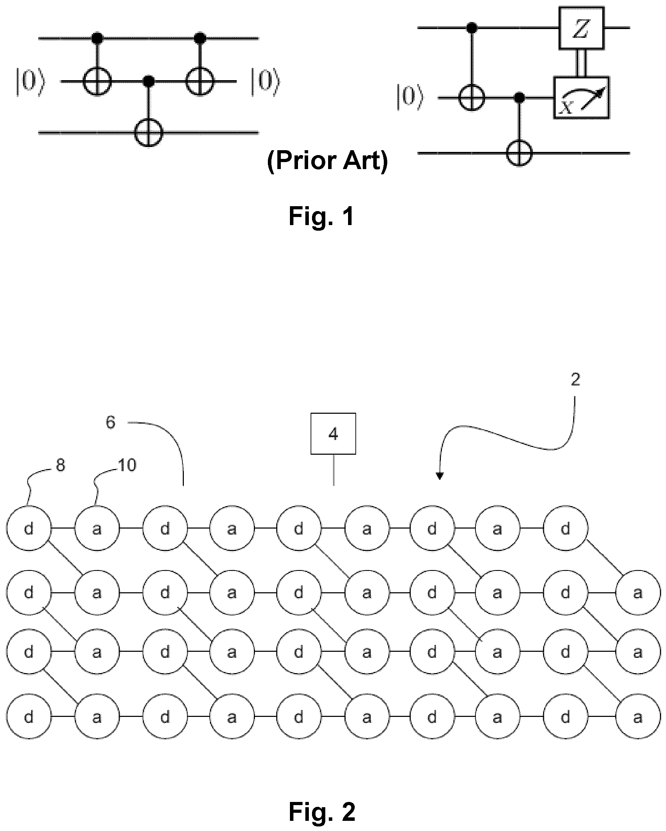

Figure 1 shows exemplary conventional quantum circuit diagrams for performing a CNOT gate between a control data qubit (the upper-most lines) and a target data qubit (the lower-most lines) via an intermediate ancilla qubit connected to each (the middle lines). In the left panel, a first CNOT gate is performed between the control data qubit and the ancilla qubit (acting as target), a second CNOT gate is subsequently performed between the ancilla qubit acting (as control) and the target data qubit, and finally a third CNOT gate is performed once more between the control data qubit and the ancilla qubit (once more acting as target). The right panel shows a slight alternative to the left panel, wherein the only difference is that the third CNOT is replaced by a measurement-based uncomputation of the ancilla qubit.

In both cases, the ancilla qubit must be configured to act as both a target in one CNOT gate and a control in another CNOT gate. However, there may be additional resource overheads required to configure the same ancilla to act as both a control and as a target during different controlled-U gates.

Moreover, in some scenarios, it may not be possible to cascade the CNOT gates (or other desired controlled-U gates in an analogous manner), due to architecture-specific restrictions on the gate set that the ancilla is able to perform.

The invention aims at improving the situation.

B. Summary

To this end, the Applicant proposes a of performing a data-data controlled-unitary gate between a first data qubit as control in a first basis ($|e_0\rangle$, $|e_1\rangle$) and a second data qubit as target, and wherein the unitary gate of the controlled-unitary matrix is defined by a unitary matrix U. The method comprises the following operations:

(i) providing the first data qubit in the first basis ($|e_0\rangle$, $|e_1\rangle$), the second data qubit, and an ancilla qubit, wherein each data qubit is connected to the ancilla qubit and wherein the first and second data qubits are not directly connected to each other, wherein the first data, second data, and ancilla qubits are all either (A) physical qubits each hosted in a respective physical mode of one or more physical resonators or (B) logical qubits each hosted by a plurality of physical qubits which are configured to perform an error correction code to encode the respective logical qubits;

(ii) configuring the ancilla qubit to be able to perform a controlled-unitary gate with either of the first and second data qubits. The method further comprises the following operations:

(iii) performing a first one-qubit state teleportation of the first data qubit to the ancilla qubit from the first basis ($|e_0\rangle$, $|e_1\rangle$) to a second basis ($|g_0\rangle$, $|g_1\rangle$) by: (a) preparing a two-qubit state entangling the first data qubit and the ancilla qubit, and (b) subsequently performing a measurement-based uncomputation of the first data qubit;

(iv) performing an ancilla-data controlled-unitary gate between the ancilla qubit as control in the second basis ($|g_0\rangle$, $|g_1\rangle$) and the second data qubit as target;

(vi) performing a second one-qubit state teleportation of the ancilla qubit to the first data qubit from the basis ($|g_0\rangle$, $|g_1\rangle$) to the basis ($|e_0\rangle$, $|e_1\rangle$) by: (a) preparing a second two-qubit state entangling the ancilla qubit and the first data qubit, and (b) subsequently performing a measurement-based uncomputation of the ancilla qubit. Operation (iv) is performed at any time before operation (vi)(b), operation (vi)(a) is performed after operation (iii)(b), and wherein (I) the unitary gate of the ancilla-data controlled-unitary gate is defined by the unitary matrix *U,* or (II) the unitary gate of the ancilla-data controlled-unitary gate is defined by another unitary matrix *V* and the method comprises a sequence of one or more gates that, in combination with the unitary *V-gate* of the ancilla-data controlled-unitary gate, performs the function of applying the unitary *U*-gate on the second data qubit.

This method is advantageous because it allows to perform a controlled-U gate between two data qubits by using a connecting ancilla qubit, hence reducing the connectivity between the qubits of a given chip. Moreover, this method allows to perform controlled-U gates through an ancilla qubit while using a potentially restricted gate set which would prevent performing the gate via simply cascading the appropriate controlled-U gates with the ancilla qubit in the conventional manner.

The present Inventors have also recognized that it may be desirable to design a specialized ancilla qubit which can only act as a control during a controlled-U gate (but cannot for instance be a control in a first controlled-U and a target in a second controlled-U gate), either at the physical level and at the logical level.

Thus, in a preferred embodiment, operation (ii) comprises configuring the ancilla qubit to only be a control in a second basis ($|g_0\rangle$, $|g_1\rangle$) in any controlled-unitary gate with either of the first and second data qubits.

That is, the ancilla qubit is specialized in that it can only be a control during any controlled-U gate (but not able to be target during one controlled-U gate and control during another controlled-U gate). At the physical qubit level, this may reduce resource overheads and drastically simplify the architecture, as the ancilla qubit need not be subject to the various additional electromagnetic pumps, couplings, and/or non-linear components typically required to ensure the ancilla qubit can also act as a target during a controlled-U. At the logical level it may also be advantageous to specialize the logical ancilla qubit, as: (i) typically to apply a transversal gate one would also need to apply the corresponding physical gate to the underlying physical qubits in the same direction; or (ii) logical gates between logical qubits respectively encoded in different types of error-correcting code may place a restriction on a logical ancilla qubit to only be a control during a logical controlled-U gate.

The present invention is particularly advantageousy suited to a cat qubit architecture. Thus, in an embodiment, the controlled-unitary gate to be performed between the first data qubit and the second data qubit is a CNOT gate between the first data qubit as control having a first data qubit resonance frequency and the second data qubit as target having a second data qubit resonance frequency, in which said first data qubit and said second data qubit are cat qubits hosted respectively in a first data resonator and in a second data resonator of a superconducting quantum circuit, and are stabilized therein by means of a command circuit arranged for selectively applying radiation to said superconducting quantum circuit, and in which said first data resonator and said second data resonator are connected only via an ancilla resonator coupled to said command circuit for stabilizing the respective ancilla qubit having an ancilla qubit resonance frequency. The method may thus comprise the following operations:

(I) as a first step in operation (iii)(a), preparing (400, 700) the ancilla qubit in a state $e^{i\phi_1 Z}|+\rangle$ where $\Phi_1$ is a phase comprised in the range $[0;\pi]$,
(II) as a second step in operation (iii)(a), performing a CNOT gate (410, 710) between said first data qubit and said ancilla qubit, with the first data qubit being the target and the ancilla qubit being the control,
(III) performing operation (iv) by performing a CNOT gate (430, 730) between said second data qubit and said ancilla qubit, with the second data qubit being the target and the ancilla qubit being the control,
(IV) as a first step in operation (vi)(a), preparing (440, 740) the control qubit in a state $|0\rangle$ or 11),
(V) as a second step in operation (vi)(a), performing a CNOT gate (450, 750) between said first data qubit and said ancilla qubit if the control qubit was prepared in $|0\rangle$, with the first data qubit being the target and the ancilla qubit being the control or preforming a zero-controlled NOT gate (450, 750) between said first data qubit and said ancilla qubit if the control qubit was prepared in $|1\rangle$,
(VI) performing operation (iii)(b) by performing an MZ operation (420, 720) on said first data qubit,
(VII) deriving a corrective quantum X gate to be performed depending on the result of operation (VI),
(VIII) performing operation (vi)(b) by performing a measurement in the basis $\{e^{i\phi_1 Z}|+\rangle, e^{i\phi_1 Z}|-\rangle\}$ (460, 760) on said ancilla qubit,
(IX) deriving a corrective quantum Z gate to be performed depending on the result of operation (VIII),

wherein operation (I) is performed before all other operations, operation (VI) is performed after operation (II), operation (IV) is performed after operation (VI), operation (V) is performed after operation (IV), and operation (VIII) is performed after operation (V).

In various further embodiments, the method may present one or more of the following features:

- wherein operation (I) comprises preparing ancilla qubit in a state $|+\rangle$ or $|-\rangle$, operation (VIII) comprises performing an MX operation (460, 760) on said ancilla qubit, and operation (IV) comprises preparing (440, 740) the control qubit in a state $|0\rangle$;
- in which operations (II) and (III) are performed successively or simultaneously, and in which operation (VII) further comprises storing (755) a quantum X gate to be applied in post-processing to said first data qubit and/or said second data qubit and/or said ancilla qubit;
- in which operation (VI) is performed before operation (III), and operation (VII) further comprises applying a quantum X gate (420) to said ancilla qubit if operation (VI) determines that a corrective quantum X gate is to be applied;
- in which operation (IX) further comprises storing (760) a quantum Z gate to be applied in post-processing to said first data qubit;
- in which operation (IX) further comprises applying a quantum Z gate (460) to said control qubit if operation (VI) determines that a corrective quantum X gate is to be applied.

The invention also concerns quantum system comprising: a plurality of physical resonators; and a command circuit for sending control signals to the physical resonators to stabilize a first data qubit, a second data qubit, and an ancilla qubit, wherein each data qubit is connected to the ancilla qubit and wherein the first and second data qubits are not directly connected to each other, wherein the first data, second data, and ancilla qubits are all either (A) physical qubits each hosted in a respective physical mode of one or more of the plurality of physical resonators or (B) logical qubits each hosted by a plurality of physical qubits which are configured to perform an error correction code to encode the respective logical qubits; wherein the command circuit is further configured to perform the method of any of the preceding embodiments.

The invention also concerns a computer program product comprising instructions which cause the quantum system to carry out the operations of the method of any of the preceding embodiments.

The invention also concerns a computer-readable medium having stored thereon the computer program product.

Other features and advantages of the invention will readily appear in the following description of the drawings, which show exemplary embodiments of the invention and on which:

- Figure 1 shows exemplary conventional quantum circuit diagrams for performing a CNOT gate between a two data qubits,
- Figure 2 shows a first embodiment of a physical quantum circuit which can be used to perform the method according to the invention,
- Figure 3 shows a method according to an embodiment of the invention,
- Figure 4 shows quantum circuit diagrams showing example operations for creating entangling copy two-qubits states which can be used in embodiments of the invention,

- Figure 5 shows quantum circuit diagrams showing example operations for performing one-qubit state teleportations which can be used in embodiments of the invention,
- Figure 6 shows a quantum circuit diagram showing an example for performing a one-qubit state teleportation which can be used in embodiments of the invention,
- Figures 7-17 show quantum circuit diagrams showing different methods according to embodiments of the invention,
- Figure 17 shows a method according to the embodiments of figures 15 and 16,
- Figures 18-19 show quantum circuit diagrams showing different methods according to embodiments of the invention, and
- Figure 20 shows a method according to the embodiments of figures 18 and 19.

The drawings and the following description are comprised for the most part of positive and well-defined features. As a result, they are not only useful in understanding the invention, but they can also be used to contribute to its definition, should the need arise.

C. Cat qubits

So far, the Applicant's work has been generally concerned with the stabilization of cat qubits. As previously explained, R. Lescanne et *al.* (2020) demonstrated that such cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of superconducting quantum circuits have observed this exponential suppression of bit-flip errors with the average number of photons in the cat states.

It is generally considered that the use of a single repetition code is sufficient to correct the remaining errors as bit-flip errors are sufficiently rare; and, more particularly, a phase-flip error correction code is sufficient to correct the remaining phase-flip. This can be for instance a repetition code defined in the dual base or any other state-of-the-art error correction code.

D. Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, *a* is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction, an ATS or a DC bias coupled to Josephson junctions - to the cat qubit mode a and by engineering the Hamiltonian $H/\hbar = g_2(a^2 - \alpha^2)b^\dagger$ + h. c., where *b* is the photon annihilation operator of the buffer mode b and $g_2$ is the two-photon coupling rate, by applying to the four-wave mixing device a pump at frequency $|2f_a - f_b|$ and a drive of the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where $K$ is the amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + \mathrm{h.\,c.}$, where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left((\cosh(r)a + \ \sinh(r)e^{i\theta}a^\dagger)^2 - \alpha^2\right)$, where $\kappa_{SC}$ is the squeezed two-photon dissipation rate, $a$ is the photon annihilation operator, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian $H/\hbar = g_{sc}$ $((\cosh(r)a + \sinh(r)e^{i\theta}a^\dagger)^2 - \alpha^2)b^\dagger + \mathrm{h.\,c.}$, where b is the photon annihilation operator of mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

f) a variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $H/\hbar = g_2(a^2 + \lambda a^\dagger a - \alpha^2)b^\dagger + \mathrm{h.\,c.}$, where $g_2$ is the amplitude of a pump at frequency $|2f_a - f_b|$, $a$ is the annihilation operator of the cat qubit mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and b is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

g) a resonant dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/\hbar = g_2(a^2 - \alpha^2)b^\dagger + \mathrm{h.\,c.}$, where b is the photon annihilation operator of the buffer mode b provided the mode frequencies verify substantially $2f_a = f_b$ and $g_2 < \kappa_b$ to which a drive of the buffer mode at frequency $f_b$ is added.

In embodiments involving cat qubits as the physical qubits, the present invention may implement any of these stabilization schemes to generate the data cat qubits and the ancilla qubits used in the quantum system described below. In the below description, the physical implementation of the cat qubits, that is the resonator driven in a specific manner to stabilize a cat qubit will be identified to the cat qubit it hosts. Hence, the expression "cat qubit" and "cat" will designate both the physical entity hosting the cat qubit and the cat qubit itself. Similarly, the word ancilla will designate an ancilla cat qubit and the physical entity hosting it, and the word data will designate a data cat qubit and the physical entity hosting it. The notion of ancilla and data relate to their roles in an FTQC, whereby the ancilla is used to measure errors on the data and help correct it. In some embodiments relating to the implementation of quantum gates, the words control and target will designate both the qubit having the corresponding role (control or target) in the quantum gate as well as the physical entity hosting it. Here again, "target" will designate a "target qubit" or a "target cat qubit" and "control" will designate a "control qubit" or "control cat qubit".

Figure 2 shows a first embodiment of a quantum circuit for performing the method according to the invention.

As appears on this figure, a quantum system 2 comprises a command circuit 4 which is arranged to apply radiation to resonators of a superconducting quantum circuit 6 in order to stabilize a respective cat qubit in each respective resonator. The superconducting quantum circuit comprises two types of resonators: data resonators 8 (labeled "d") and ancilla resonators 10 (labeled "a"). As a result, the data resonators 8 host data cat qubits, and the ancilla resonators 10 host ancilla cat qubits. In some embodiments, the qubits need not be cat qubits, and may be other conventional qubits such as transmon or fluxonium.

In the example shown here, the resonators are substantially aligned in a grid like geometry in lines and rows. In various embodiments, the resonators in any given line or any given row maybe slightly offset with respect to the others within the same line or row. Furthermore, other geometries could be used for arranging the resonators. What matters most is that the various lines of resonators do not intersect or overlap. On figure 2, two lines 12 are shown, and they are substantially parallel between them. Here again, the lines maybe imperfectly parallel, as long as they do not intersect or overlap.

The reason for that is that, within a given line, there is a strict alternance of data cat qubits and ancilla cat qubits, and each cat is connected to its two immediate neighbors within the bus line. This pattern is a first essential element which provides the robustness / flexibility compromise of the invention. The second essential element is that the lines are interconnected, with each ancilla being connected to a data of the bus line above. It will appear readily here that "above" is a relative term depending on the arrangement of the superconducting quantum circuit 6. In the example shown here, each ancilla is connected to the data in the bus line immediately above, and immediately to the left of the ancilla. As an alternative, the ancilla could be connected to the data immediately to the right, or in the bus line immediately below.

In some embodiments, one may imagine connecting lines not immediately neighboring one another, or connecting an ancilla and a data which are further than immediately to the left or to the right in the bus line above or below. However, this means that the routing of the connections will be complex to manufacture, and one should also keep in mind that longer connections are more prone to errors.

As a result, one can see that the topography of the superconducting quantum circuit 6 of figure 2 allows for both robustness and flexibility. Indeed, on the one end, a very long repetition code, or a classical LDPC code as described by the Applicant in EP23307437.6.

While the example shown on figure 2 represents a grid having 4 lines and 10 rows, it will appear readily that there could be more lines or more rows but also less (although that would be less interesting, particularly below 7 total resonators). Incidentally, figure 2 shows that the top most bus line has one less ancilla than the other lines. This is normal and due to the topography described above. In some implementations, there can be a resonator in the place of the empty space of the top bus line. It only matters that this resonator not host a cat qubit or any qubit at all and that it remains isolated from the rest of the superconducting quantum circuit 6. It is noted that the example shown in figure 2 is just one example of a physical quantum circuit suitable for applying the inventive method described herein. Many different quantum systems and many different command circuits. A generalization of the example developed in depth above can thus easily be realized. What is important is the provision of physical resonators in which to host qubits (in general any physical oscillatory mode suitable for hosting a qubit according to the type of architecture), qubit couplers for enabling coupling or connection therebetween so as to perform at least two-qubit entangling quantum gates, and a command circuit for sending control signals to the physical resonators and/or qubit couplers to achieve said qubit preparation and manipulation, as well as readout.

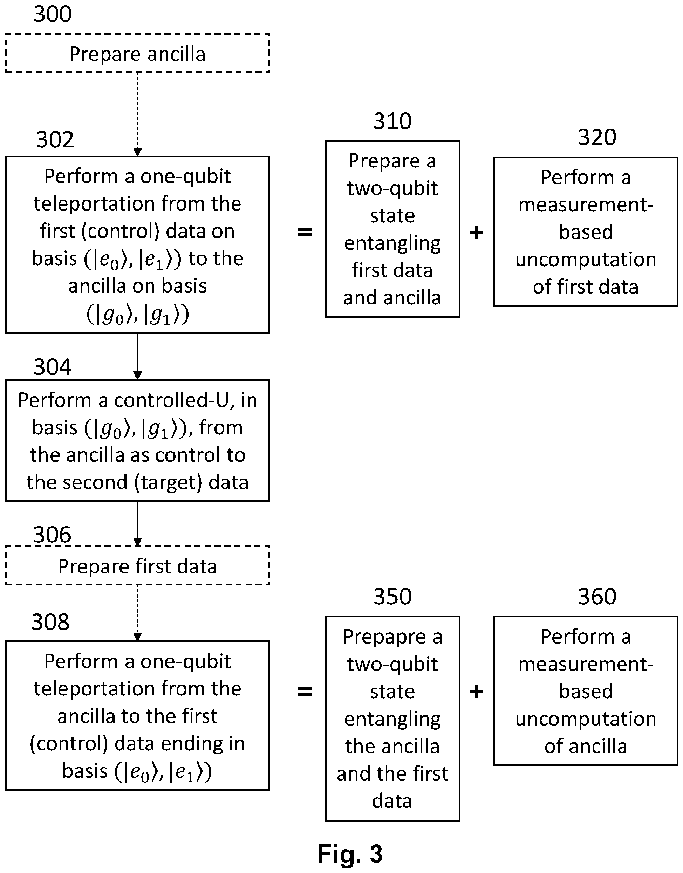

Figure 3 provides a general description of a method to perform a "data-data" controlled-unitary gate, according to the present invention.

As will be appreciated, in general a controlled-unitary gate (also termed controlled- U represented by unitary matrix "$CU$") is defined as follows. Given an arbitrary basis of one qubit ($|e_0\rangle$, $|e_1\rangle$) and a gate defined by its unitary matrix U, the corresponding controlled-U gate is the gate whose unitary matrix is $|e_0\rangle\langle e_0| \otimes \mathbb{1} + |e_1\rangle\langle e_1| \otimes U$, with $\mathbb{1}$ being the identity. Here, the dimension of the target has not been specified, namely in general U (and 1) can be a multi-qubit gate.

As will be appreciated, the command circuit 4 is configured to send control signals to the resonators to induce a desired controlled- U gate.

As an example, the CNOT gate is a controlled-U gate with the control in the Z basis and $U = X$ (so also known as a "controlled-X" gate). One can verify:

$$\begin{pmatrix} 1 & 0 & 0 & 0 \\ 0 & 1 & 0 & 0 \\ 0 & 0 & 0 & 1 \\ 0 & 0 & 1 & 0 \end{pmatrix} = \begin{pmatrix} 1 & 0 \\ 0 & 0 \end{pmatrix} \otimes \begin{pmatrix} 1 & 0 \\ 0 & 1 \end{pmatrix} + \begin{pmatrix} 0 & 0 \\ 0 & 1 \end{pmatrix} \otimes \begin{pmatrix} 0 & 1 \\ 1 & 0 \end{pmatrix}.$$

Herein, the terms $X$, $Y$, and $Z$ denote respectively the Pauli-X, -Y, and -Z matrices (corresponding to physical or logical $X$, $Y$, and $Z$ gates), and where appropriate denote corresponding $X$, $Y$, and $Z$ bases (e.g. in terms of measurements).

In the context of, for instance, figure 2 (or any other error-correcting architecture comprised of interconnected data and ancilla qubits), the embodiments described herein will be understood as applying to physical qubits, namely, the qubits are physical states each being hosted in a physical oscillatory mode (e.g. of a respective physical resonator, or different physical oscillatory modes hosted concurrently in the same physical resonator). This may be continuous encodings of a bosonic code, such as Fock states or coherent states of physical resonator (or superpositions thereof), or discrete encodings in the energy levels such as a transmon or fluxonium or trapped ions or cold atoms etc.

However, the present method applies equally to logical qubits. Namely, a logical qubit is the error-corrected quantum information protected via delocalization over the physical data qubits of the error-correcting code (with error detection being facilitated by physical ancilla qubits interwoven with the physical data qubits).

In the specific example of a physical CNOT gate between a target cat qubit realised by stabilization scheme (a) above and a control qubit (preferably another cat qubit as the control qubit), the command circuit 4 may induce the CNOT gate by sending a control signal in the form of an electromagnetic parametric pump having the frequency of the control qubit (namely the appropriate resonant frequency of the resonator in which the control qubit is hosted) to the four-wave mixing device of the target, for instance as described in EP23305298.4 filed by the Applicant on 06/03/2023. Alternatively, the command circuit 4 may be configured to induce a physical CNOT gate via applying a "cross-Kerr" interaction as described in Putterman, Harald, et al. "Hardware-efficient quantum error correction using concatenated bosonic qubits." arXiv preprint arXiv:2409.13025 (2024), or a dissipative conditional rotation via appropriate parametric pumps at different frequencies as described in Guillaud, Jérémie, and Mazyar Mirrahimi. "Repetition cat qubits for fault-tolerant quantum computation." Physical Review X9.4 (2019): 041053, or a logical CNOT gate via lattice-surgery schemes involving additional "routing" qubits as described in Gouzien, Élie, et al. "Performance analysis of a repetition cat code architecture: Computing 256-bit elliptic curve logarithm in 9 hours with 126 133 cat qubits." Physical Review Letters 131.4 (2023): 040602 and Ruiz, Diego, et al. "LDPC-cat codes for low-overhead quantum computing in 2D." arXiv preprint arXiv:2401.09541 (2024)..

Moreover, it will be appreciated that there is an entire family of controlled-U gates with the control in a given basis, with the CNOT just one specific example, wherein the command circuit 4 is configured to send the appropriate control signals to the resonators hosting the qubits to induce the desired physical or logical controlled-U gate. The control signals are chosen according to the specific qubit architecture, as known in the art.

Thus, the present inventors have recognized that it may be beneficial to construct a system for performing a controlled-unitary gate between two data qubits (namely a "data-data" controlled-unitary gates) only through an ancilla qubit, either at the physical- or the logical- level.

Specifically, a first data qubit and a second data qubit are each connected to an ancilla qubit and wherein the first and second data qubits are coupled to each other only via the ancilla qubit, wherein the first data qubit is the control of the controlled-unitary gate and is in a first (known) basis ($|e_0\rangle$, $|e_1\rangle$). The system is configured such that the only possible two-qubit gate is a controlled-U. In a preferable embodiment, only the ancilla is able to be the control

$$CU = |e_0\rangle\langle e_0|_{\text{ancilla}}\, \mathbb{1}_{\text{data}} + |\, e_1\rangle\langle e_1|_{\text{ancilla}}\, U_{\text{data}}$$ in a second (known) basis ($|g_0\rangle$, $|g_1\rangle$) in controlled-U gates between either of the data qubits.

As will become clear, the identifier "data-data" in the term "data-data controlled-unitary gate" merely indicates that the inventive controlled-unitary gate is between data qubits and is a global gate achieved therebetween by decomposition into several sub-operations involving only gates between a data qubit and the specialized ancilla qubit which takes the role of only control in the second basis ($|g_0\rangle$, $|g_1\rangle$), such that no direct connection is necessary between the data qubits. Of course, the first basis ($|e_0\rangle$, $|e_1\rangle$) need not be different to the second basis ($|g_0\rangle$, $|g_1\rangle$), they may in fact be the same basis ($|e_0\rangle$, $|\, e_1\rangle$) = ($|g_0\rangle$, $|g_1\rangle$).

As mentioned, the first and second data qubits and the ancilla qubits are all either: (A) physical qubits each hosted in a respective physical mode of one or more physical resonators (e.g. as described above in relation to the resonators 8 and 10 of the quantum system 2 of figure 1); or (B) logical qubits each hosted by a plurality of physical qubits which are configured to perform an error correction code to encode the respective logical qubits (e.g. the quantum system 2 of figure 1 may be configured to encode at least three logical qubit and configured to perform the relevant logical controlled-U gates therebetween).

For simplicity, herein the identifier "physical" or "logical" is dropped in the understanding that the present invention can apply to both physical controlled-U gates between physical qubits and logical controlled-U gates between logical qubits.

For the avoidance of doubt, herein by "prepare", we mean send control signals, with the command circuit 4, to the resonators to physically prepare the physical two-qubit state, or send control signals, with the command circuit 4, to the resonators such that the logical qubits (encoded by the ECC from the plurality of physical qubits) logically prepares the logical two-qubit state. By "measure" (included in , we mean send control signals, with the command circuit 4, to the resonators to physically perform a state readout indicating the state of the physical qubit(s), or send control signals, with the command circuit 4, to the resonators such that the logical qubits (encoded by the ECC from the plurality of physical qubits) are logically read out indicating the state of the logical qubit(s). By "perform" a single- or multi-qubit gate (or indeed any other "operation" herein defined), we mean send control signals, with the command circuit 4, to the resonators to physically perform a single- or multi-qubit gate on the relevant physical qubit(s), or send control signals, with the command circuit 4, to the resonators such that the logical qubits (encoded by the ECC from the plurality of physical qubits) are subject to logical single- or multi-qubit gate on the relevant logical qubit(s).

In an optionally distinct operation 300, the command circuit 4 prepares the ancilla qubit in a known state.

In an operation 302, the command circuit 4 performs a first one-qubit teleportation of the first (control) data qubit in basis ($|e_0\rangle, |e_1\rangle$) to the ancilla qubit in a second basis ($|g_0\rangle, |g_1\rangle$).

Specifically, a one-qubit teleportation takes a state $\alpha|e_0\rangle + \beta|e_1\rangle$ on one "input" qubit and yields the state $\alpha|g_0\rangle + \beta|g_1\rangle$ on another "output" qubit, for arbitrary one-qubit bases ($|e_0\rangle, |e_1\rangle$) and ($|g_0\rangle, |g_1\rangle$). This may be obtained by: (i) making an "entangling copy" of the input qubit to the output qubits, transforming $\alpha|e_0\rangle + \beta|e_1\rangle$ into a two-qubit state $\alpha|f_0\rangle|g_0\rangle + \beta|f_1\rangle|g_1\rangle$ (as discussed in detail below); and subsequently (ii) using a measurement-based uncomputation of the input qubit to yield $\alpha|g_0\rangle + \beta|g_1\rangle$ on the output qubit.

Operation 310 shows the step of making an entangling copy. Generally, we refer to three arbitrary one-qubit bases: ($|e_0\rangle, |e_1\rangle$) - which is that of the first (control) data qubit; ($|g_0\rangle, |g_1\rangle$) - which is that of the ancilla qubit (e.g. which can be prepared in this basis in the first operation 300 or the entangling gates can be selected such that the ancilla qubit is in this basis); and ($|f_0\rangle, |f_1\rangle$) - which accounts for a possible change of basis of the input qubit due to the specific form entangling copy step. Preparing an entangling copy of this state may thus comprise preparing the two-qubit state $\alpha|f_0\rangle|g_0\rangle + \beta|f_1\rangle|g_1\rangle$ with the first (control) "input" qubit and the ancilla qubit.

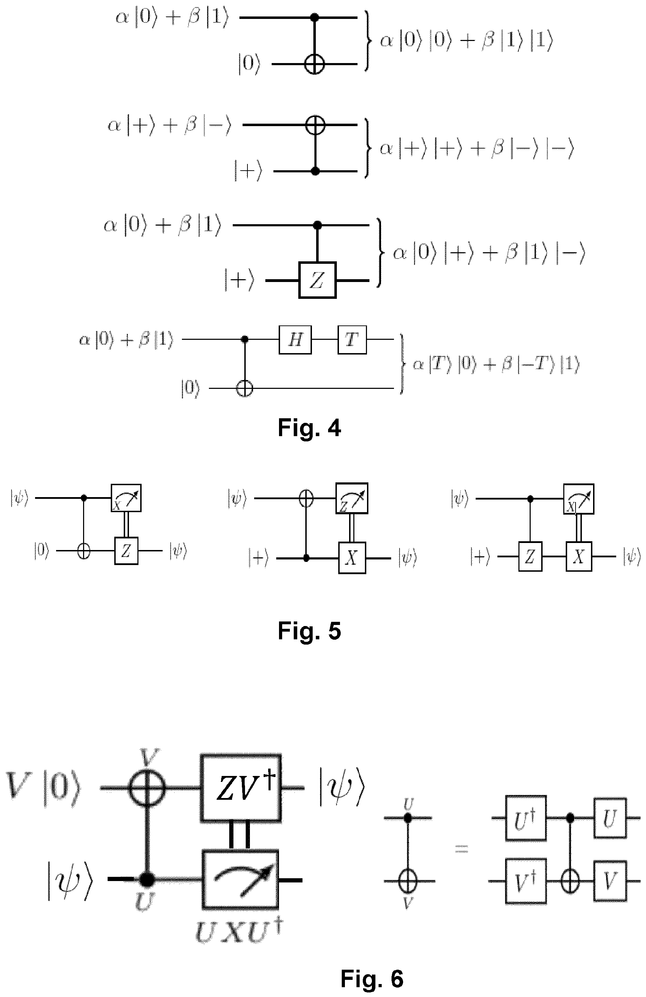

Figure 4 shows of different examples of "entangling copy" in isolation, and adopts the formalism of "quantum circuit diagrams" for representing quantum gate operations wherein each line represents the operations performed on a given qubit, and will readily be understood by the man skilled in the art. Here the upper line represents the control "input" qubit and the lower line represents the ancilla qubit of an entangling copy operation, with the state indicated to the right of the curly brackets denoting the prepared two qubit state (the entangled copy). For the avoidance of doubt, herein "quantum circuit diagram" refers to the graphical depiction a sequence of, e.g., quantum gates, measurements and initializations of qubits (generally referred to herein as a "quantum circuit sequence") wherein the horizontal axis denotes time starting at the left-hand side and ending at the right-hand side. These should not be confused with "superconducting quantum circuit" or other "quantum circuit" which refers to the physical architecture in which qubits are hosted and manipulated, such as that described in figure 1, the distinction of which is clear in context.

In the upper-most panel of Figure 4, the quantum circuit sequence prepares an entangling copy with the three bases being the ones of Z. Specifically, the input qubit is in $\alpha|0\rangle + \beta|1\rangle$ and the ancilla qubit is in $|0\rangle$. A CNOT gate is performed between the input qubit as control and the ancilla qubit as target, which prepares the two-qubit state $\alpha|0\rangle|0\rangle + \beta|1\rangle|1\rangle$. As will be appreciated, all entangling copy quantum circuit sequences can be obtained from this circuit with additional application of one-qubit unitaries.

For instance, in the second panel of Figure 4 the quantum circuit sequence prepares an entangling copy with the three bases being the ones of X. Specifically, the input qubit is in $\alpha|+\rangle + \beta|-\rangle$ and the ancilla qubit is in $|+\rangle$. A CNOT gate is performed between the input qubit as target and the ancilla qubit as control, which prepares the two-qubit state $\alpha|+\rangle|+\rangle + \beta|-\rangle|-\rangle$.

In the third panel of Figure 4, the quantum circuit sequence prepares an entangling copy with the basis of the input qubit being the ones of Z and the basis of the ancilla qubit being the ones of X. Specifically, the input qubit is in $\alpha|0\rangle + \beta|1\rangle$ and the ancilla qubit is in $|+\rangle$. A controlled-Z gate is performed between the input qubit and the ancilla qubit, which prepares the two-qubit state $\alpha|0\rangle|+\rangle + \beta|1\rangle|-\rangle$.

In the lower-most panel of Figure 4, the quantum circuit sequence prepares an entangling copy with the bases of the input qubit and ancilla qubit both being the ones of Z, whereas the basis of the prepared two-qubit state being ($|T\rangle, Z|T\rangle = |-T\rangle$) due to a change of basis occurring due to the specific form entangling copy step. Specifically, the input qubit is in $\alpha|0\rangle + \beta|1\rangle$ and the ancilla qubit is in $|0\rangle$. A CNOT gate is performed between the input qubit as control and the ancilla qubit as target, followed by consecutive Hadamard "H" gate (represented by the single-qubit unitary matrix $H = \frac{1}{\sqrt{2}}\begin{bmatrix} 1 & 1 \\ 1 & -1 \end{bmatrix}$)

and T gate (represented by the single-qubit unitary matrix $T = \begin{bmatrix} 1 & 0 \\ 0 & e^{i\pi/4} \end{bmatrix}$, which prepares the two-qubit state $\alpha|T\rangle|0\rangle + \beta|-T\rangle|1\rangle$.

As will be appreciated, preparing the ancilla need not be considered a distinct step, and can be incorporated in the entangling copy preparing (e.g., by directly preparing the two-qubit state $\alpha|f_0\rangle|g_0\rangle + \beta|f_1\rangle|g_1\rangle$). What is important is that the basis the ancilla ($|g_0\rangle, |g_1\rangle$) is known (or known relative to other qubit basis so as to track basis changes).

Thus, in operation 310, the command circuit 4 prepares a two-qubit state (in the examples described above this can be though as preparing $\alpha|f_0\rangle|g_0\rangle + \beta|f_1\rangle|g_1\rangle$).

Operation 320 shows the step of using a measurement-based uncomputation of the "input" qubit for the one-qubit teleportation, namely the first data qubit. Measurement-based uncomputation is a generic technique for removing subsystems from a quantum state without collapsing it based on a measurement in a proper basis followed by a correction on the remaining part of the state.

Specifically, as an example, given a two-qubit state obtained from an entangling copy step $\alpha|f_0\rangle|g_0\rangle + \beta|f_1\rangle|g_1\rangle$, the following process performs a measurement-based uncomputation of the input qubit: (i) perform a measurement of the input qubit in the ( $\frac{|f_0\rangle+|f_1\rangle}{\sqrt{2}}$, $\frac{|f_0\rangle-|f_1\rangle}{\sqrt{2}}$ ) basis; and (ii) if the measurement results indicate (or it is inferable therefrom) that state $\frac{|f_0\rangle-|f_1\rangle}{\sqrt{2}}$ was measured, then apply the "correction" operation $|g_0\rangle\langle g_0| - |g_1\rangle\langle g_1|$ to the second (namely the ancilla) qubit, otherwise do nothing (or vice versa).

The resulting state is the ancilla being in single-qubit state $\alpha|g_0\rangle + \beta|g_1\rangle$, with the input qubit thus effectively removed (disentangled) from the quantum state of the entangling copy step.

A proof is provided as follows. Introducing the definitions: $\left|+_f\right\rangle = \frac{|f_0\rangle+|f_1\rangle}{\sqrt{2}}$ and $\left|-_f\right\rangle = \frac{|f_0\rangle-|f_1\rangle}{\sqrt{2}}$, we then

have $|f_0\rangle = \frac{|+_f\rangle+|-_f\rangle}{\sqrt{2}}$ and $|f_1\rangle = \frac{|+_f\rangle-|-_f\rangle}{\sqrt{2}}$, we can then rewrite the two-qubit state from the entangling copy step

as $\alpha|f_0\rangle|g_0\rangle + \beta|f_1\rangle|g_1\rangle = \frac{1}{\sqrt{2}}\left[\left|+_f\right\rangle(\alpha|g_0\rangle + \beta|g_1\rangle) + \left|-_f\right\rangle(\alpha|g_0\rangle - \beta|g_1\rangle)\right]$.

The measurement in the ($|+_f\rangle$, $|-_f\rangle$) basis have equal probabilities (0.5) of yielding each result. If $|+_f\rangle$ is measured, the state is projected to $\alpha|g_0\rangle + \beta|g_1\rangle$, what is directly the expected output. If $|-_f\rangle$ is measured, the state is projected to $\alpha|g_0\rangle - \beta|g_1\rangle$. Thus, after applying $|g_0\rangle\langle g_0| - |g_1\rangle\langle g_1|$ (or equivalent of Z in this basis), the correct state is also obtained.

More generally, the above also holds in any basis of the type ( $\frac{|f_0\rangle+e^{i\theta}|f_1\rangle}{\sqrt{2}}$, $\frac{|f_0\rangle-e^{i\theta}|f_1\rangle}{\sqrt{2}}$ ), with $\theta$ any real number, when applying an additional operation $|g_0\rangle\langle g_0| + e^{i\theta}|g_1\rangle\langle g_1|$ at the end. For instance, for any real number $\theta$, introducing the following definitions: $\left|+_{\theta,f}\right\rangle = \frac{|f_0\rangle+e^{i\theta}|f_1\rangle}{\sqrt{2}}$ and $\left|-_{\theta,f}\right\rangle = \frac{|f_0\rangle-e^{i\theta}|f_1\rangle}{\sqrt{2}}$ means that

$|f_0\rangle = \frac{|+_{\theta,f}\rangle+|-_{\theta,f}\rangle}{\sqrt{2}}$ and $|f_1\rangle = e^{-i\theta}\frac{|+_{\theta,f}\rangle-|-_{\theta,f}\rangle}{\sqrt{2}}$, such that the initial state can be rewritten as

$\alpha|f_0\rangle|g_0\rangle + \beta|f_1\rangle|g_1\rangle = \frac{1}{\sqrt{2}}\left[\left|+_{\theta,f}\right\rangle(\alpha|g_0\rangle + \beta e^{-i\theta}|g_1\rangle) + \left|-_{\theta,f}\right\rangle(\alpha|g_0\rangle - \beta e^{-i\theta}|g_1\rangle)\right]$.

The measurement in the ($|+_{\theta,f}\rangle$, $|-_{\theta,f}\rangle$) basis have equal probabilities (0.5) of yielding each result. If $|+_{\theta,f}\rangle$ is measured, the state is projected to $\alpha|g_0\rangle + \beta e^{-i\theta}|g_1\rangle$. If $|-_{\theta,f}\rangle$ is measured, the state is projected to $\alpha|g_0\rangle - \beta e^{-i\theta}|g_1\rangle$. Thus, after applying $|g_0\rangle\langle g_0| - |g_1\rangle\langle g_1|$ (or equivalent of Z in this basis), the same state $\alpha|g_0\rangle - \beta e^{-i\theta}|g_1\rangle$ also obtained. A last operation $|g_0\rangle\langle g_0| + e^{i\theta}|g_1\rangle\langle g_1|$ brings the state back to the expected result $\alpha|g_0\rangle + \beta|g_1\rangle$.

As will be appreciated, the correction operations (e.g. so-called "Pauli corrections") need not (and indeed typically are not) physically applied, but rather they are used to update a Pauli frame. Said otherwise, these corrections can be tracked throughout a quantum circuit sequence. Multiple ones of these corrections can be tracked, collected, compiled together satisfying the relevant commutation relations, and subsequently physically applied in one go or simply applied in software (e.g. by taking the physical output of a quantum sequence, recognising how said corrections would modify the output, and thus digitally setting the result of the quantum sequence accordingly). As such, in the above specific example, if the correction operation is not applied immediately to the second (namely the ancilla) qubit and instead delayed, further operations on the second qubit may result in the correction being tracked and applied to one or more qubits other than the second qubit.

Thus, in operation 320, the command circuit 4 performs a measurement-based uncomputation of the control data qubit (for instance, in the context of the above examples, such that the state of the resulting ancilla qubit is $\alpha|g_0\rangle + \beta|g_1\rangle$), leaving the first data qubit free for subsequent entanglements (or state preparation) in anticipation of subsequent steps of the method according to the invention.

Figure 5 shows of different examples of quantum circuit diagrams for performing a one-qubit teleportation in isolation, comprising preparing a two-qubit state (entangling copy) followed by measurement-based uncomputation, wherein for each the quantum state of the upper qubit generally referred to as $|\psi\rangle$ is teleported to the lower qubit.

In the left panel of Figure 5, the upper qubit is in general state $|\psi\rangle$ and the lower qubit is in $|0\rangle$. A CNOT gate is performed between the upper qubit $|\psi\rangle$ as control and the lower qubit $|0\rangle$ as target to prepare a two-qubit state (entangled copy). The upper qubit is then measured in the X basis, and, depending on the results of the measurement (as discussed in detail above), a corrective single-qubit Z-gate is to be applied on the lower qubit such that the resulting state is $|\psi\rangle$, thereby performing an uncomputation of the upper qubit from the entangled copy.

In the middle panel of Figure 5, the upper qubit is in general state $|\psi\rangle$ and the lower qubit is in $|+\rangle$. A CNOT gate is performed between the lower qubit $|+\rangle$ as control and the upper qubit $|\psi\rangle$ as target to prepare a two-qubit state (entangled copy). The upper qubit is then measured in the Z basis, and, depending on the results of the measurement (as discussed in detail above), a corrective single-qubit X-gate is to be applied on the lower qubit such that the resulting state is $|\psi\rangle$, thereby performing an uncomputation of the upper qubit from the entangled copy.

In the right panel of Figure 5, the upper qubit is in general state $|\psi\rangle$ and the lower qubit is in $|+\rangle$. A CZ gate is performed between the lower qubit $|+\rangle$ and the upper qubit $|\psi\rangle$ to prepare a two-qubit state (entangled copy). The upper qubit is then measured in the X basis, and, depending on the results of the measurement (as discussed in detail above), a corrective single-qubit X-gate is to be applied on the lower qubit such that the resulting state is $|\psi\rangle$, thereby performing an uncomputation of the upper qubit from the entangled copy.

Figure 6 shows another example of a quantum circuit diagram for performing a one-qubit teleportation comprising preparing a two-qubit state (entangling copy) followed by measurement-based uncomputation. The upper qubit is in a known state $V|0\rangle$ wherein V is a one-qubit unitary and the lower qubit is in a general state $|\psi\rangle$. A CNOT gate is performed between the lower qubit $|\psi\rangle$ as control in the basis of another unitary U and the upper qubit $V|0\rangle$ as target in the basis of unitary V to prepare a two-qubit state (entangled copy). The lower qubit is then measured in the basis $UXU^{\dagger}$, and, depending on the results of the measurement (as discussed in detail above), a corrective single-qubit gate corresponding to the one-qubit unitary $V^{\dagger}Z$ is to be applied on the upper qubit such that the resulting state is $|\psi\rangle$, thereby performing an uncomputation of the lower qubit from the entangled copy.

In an operation 304, the command circuit 4 performs a controlled-unitary gate between the ancilla qubit as control in the basis ($|g_0\rangle$, $|g_1\rangle$) and the second data qubit as the target. For the avoidance of doubt, the unitary gate U of this ancilla-data controlled-unitary gate in operation is the same as that of the global data-data controlled-unitary gate.

In an optionally distinct operation 306, the command circuit 4 prepares the first data qubit in a known state.

In an operation 308, the command circuit 4 performs a second one-qubit teleportation of the ancilla qubit to the first (control) data qubit in the original basis ($|e_0\rangle$,$|e_1\rangle$), in an analogous manner as described above in relation to the first one-qubit teleportation.

Thus, the command circuit 4, in operation 350, may make an entangling copy, by preparing another two-qubit state entangling the ancilla qubit and the first data qubit. For instance, this may comprise creating the two-qubit state as described above in relation to the examples of figure 4 $\alpha^*|f_0\rangle|e_0\rangle + \beta^*|f_1\rangle|e_1\rangle$ with the ancilla qubit as the "input" qubit and the first (control) data qubit taking the role which the ancilla previously played in operation 310, wherein here the different coefficients $\alpha^*$, $\beta^*$ merely denote that information has been entangled from the operation 304 of the controlled-U between the ancilla qubit and the second data qubit.

As will be appreciated, again, the preparing of the first data need not be considered a distinct step, and can be incorporated in the entangling copy preparing (namely preparing the two-qubit state in operation 350). What is important is that the basis the first data qubit is known (or known relative to other qubit basis so as to track basis changes).

Finally, in operation 360, the command circuit 4 performs a measurement-based uncomputation of the ancilla qubit, such that the first data qubit ends in its original basis ($|e_0\rangle$, $|e_1\rangle$).

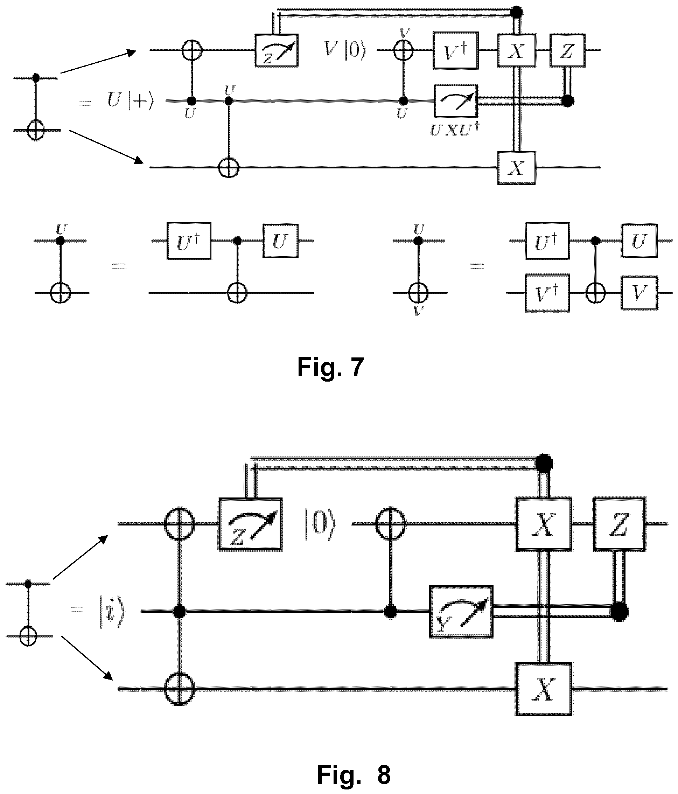

Figures 7-13 shows quantum circuit diagrams for performing a controlled-unitary gate between a first data qubit (top-most line) and a second data qubit (lower-most line), according to various embodiments of the invention. The middle two lines show the operations performed on the ancilla qubit.

Specifically, figures 7-11 in show quantum circuit diagrams for performing a CNOT gate between the first data qubit as control (upper-most line) and the second data qubit as target (lower-most line), according to various embodiments of the invention.

Referring to figure 7, the ancilla is initially prepared in state $U|+\rangle$, where U is a single-qubit unitary. A first CNOT gate is then performed between the ancilla qubit as control in the basis of U and the first data qubit as target. This first CNOT is an entangling copy with the control in the U-basis, and the equivalent function broken down into a conventional CNOT gate and single-qubit unitary U-gates is shown in the lower left panel of figure F.

A first measurement-based uncomputation is then performed by measuring the first data qubit in the Z-basis (also known as an "MZ operation"). A conditional correction operation (depending on the result of the MZ operation) is an X-gate and is applied on the first and second data qubits. In order to denote the conditionality of this correction, there is a double bar linking the MZ operation and the X correction. Herein, a double bar linking two operations will mean that the second operation is conditional on the result of the first one.

As shown in figure 7, the conditional correction operation need not be done in sequence immediately after the MZ operation of the measurement-based uncomputation. Indeed, if it were performed after the MZ operation but before the second and third CNOT gates (described below), then the X-gate would instead be applied to ancilla qubit. Furthermore, as described above, the correction operations may simply be determined and tracked throughout one or more (or all) of the subsequent operations of the quantum circuit sequence and used to update a Pauli (i.e. basis) frame of the result provided at the end of the quantum circuit sequence.

A second CNOT gate is performed between the ancilla qubit as control in the basis of U and the second data qubit as target.

After the first measurement-based uncomputation, the first data qubit is prepared in state $V|+\rangle$, where V is a single-qubit unitary. A third CNOT gate is then performed between the ancilla qubit as control in the basis of U and the second data qubit as target in the basis of $V$. This third CNOT is an entangling copy with the control in the U-basis and the target in the V-basis, and the equivalent function broken down into a conventional CNOT gate and single-qubit unitary $U$- and $V$-gates is shown in the lower right panel of figure F.

A single-qubit unitary $V^{\dagger}$-gate is applied to the first data qubit, and a second measurement-based uncomputation is performed by measuring the ancilla qubit in the basis given by $UXU^{\dagger}$. A conditional correction operation (depending on the result of the $UXU^{\dagger}$ measurement) is a Z-gate and is applied on the first data qubit.

Referring to figure 8, the ancilla is initially prepared in state $|i\rangle$. A first CNOT gate is then performed between the ancilla qubit as control and the first data qubit as target. Simultaneously to the first CNOT gate, a second CNOT gate is performed between the ancilla qubit as control and the second data qubit as target.

A first measurement-based uncomputation is then performed by measuring the first data qubit in the Z-basis (also known as an "MZ operation"). A conditional correction operation (depending on the result of the MZ operation) is an X-gate and is applied on the first and second data qubits.

After the first measurement-based uncomputation, the first data qubit is prepared in state $|0\rangle$. A third CNOT gate is then performed between the ancilla qubit as control and the second data qubit as target.

A second measurement-based uncomputation is performed by measuring the ancilla qubit in the basis of $Y$. A conditional correction operation (depending on the result of the $Y$ measurement) is a $Z$-gate and is applied on the first data qubit.

As will be appreciated, A CNOT gate between a first qubit as control and a second qubit as target is equivalent to a controlled-Z gate in the X-basis

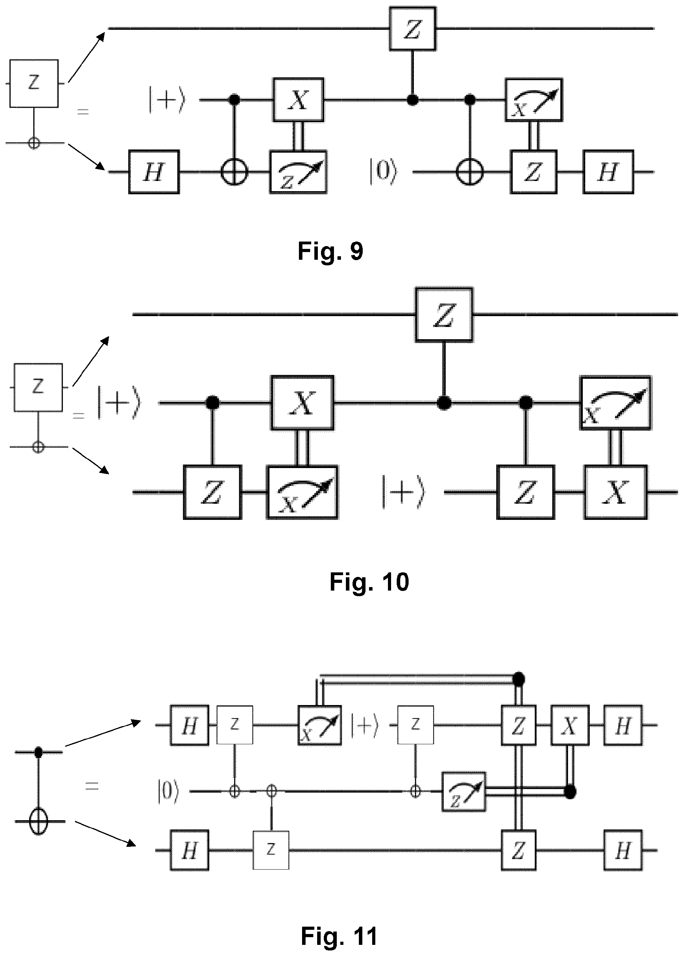

For instance, figures 7-10 show quantum circuit diagrams for performing a CNOT gate between the first data qubit as control (upper-most line) and the second data qubit as target (lower-most line), according to various embodiments of the invention. However, as will be appreciated, a CNOT gate between the first data qubit as control and the second data qubit as target is equivalent to a controlled-Z gate with the control in the X basis (herein referred to as a $C_XZ$ gate). Thus, figures 9 and 10 both show quantum circuit diagrams wherein the two one-qubit teleportation steps (i.e. preparing the two-qubit state "entangling copy" and subsequent measurement-based uncomputation of one of the qubits involved) is performed between the ancilla qubit and the data qubit of the lower-most line, as opposed to involving the data qubit of the upper-most line as shown in figures 7 and 8. It must be noted that these quantum circuit sequences still result in performing a CNOT gate between the data qubit of the upper-most line as control and the data qubit of the lower-most line as target, but can be alternatively (and equivalently) defined as a $C_XZ$ gate between the lower-most line as control and the upper-most line as target.

Thus, when referring to figures 9 and 10, for descriptive purposes, the roles of the first and data qubits will be exchanged such that the upper-most line of figures H and I will be referred to as the second data qubit and the lower-most line of figures 9 and 10 will be referred to as the first data qubit.

Referring to figure 9, the ancilla is initially prepared in state |+). A first Hadamard "H" gate is performed on the first data qubit. A first CNOT gate is then performed between the ancilla qubit as control and the first data qubit as target. As will be appreciated, the first Hadamard gate and first CNOT (and even the ancilla preparation step) can be considered together as providing an entangling copy by preparing the appropriate two-qubit state from the first data qubit and the ancilla qubit.

A first measurement-based uncomputation is then performed by measuring the first data qubit in the Z-basis. A conditional correction operation (depending on the result of the MZ operation) is an $X$-gate and is applied on the ancilla qubit.

A CZ is performed between the ancilla qubit and the second data qubit.

After the first measurement-based uncomputation, the first data qubit is prepared in state $|0\rangle$. A second CNOT gate is then performed between the ancilla qubit as control and the first data qubit as target.

A second measurement-based uncomputation is performed by measuring the ancilla qubit in the basis of $X$. A conditional correction operation (depending on the result of the $X$ measurement) is a $Z$-gate and is applied on the first data qubit. A second Hadamard "H" gate is performed on the second data qubit. As will be appreciated, the second Hadamard gate and second CNOT (and even the first data qubit preparation step) can be considered together as providing an entangling copy by preparing the appropriate two-qubit state from the first data qubit and the ancilla qubit.

The quantum circuit diagram of figure 10 can be derived from that of figure 9 by shifting the first Hadamard gate rightward and the second Hadamard gate leftward, such that via known quantum circuit diagram arithmetic each operation in the quantum circuit sequence the Hadamard "hops over" is correspondingly altered. For instance, passing a Hadamard gate to the right-hand side of an X-gate, i.e. the NOT part on the target of a CNOT gate, the X-gate gets turned into a Z-gate.

Thus, in figure 10, after the ancilla is initially prepared in state |+), a first CZ gate is then performed between the ancilla qubit and the first data qubit.

A first measurement-based uncomputation is then performed by measuring the first data qubit in the X-basis. A conditional correction operation (depending on the result of the MX operation) is an *X*-gate and is applied on the ancilla qubit.

A CZ is performed between the ancilla qubit and the second data qubit.

After the first measurement-based uncomputation, the second data qubit is prepared in state $|+\rangle$. A second CZ gate is then performed between the ancilla qubit and the second data qubit.

A second measurement-based uncomputation is performed by measuring the ancilla qubit in the basis of *X*. A conditional correction operation (depending on the result of the *X* measurement) is an *X*-gate and is applied on the second data qubit.

Figure 11 shows a quantum circuit diagram for performing a CNOT gate between the first data qubit as control (once more the upper-most line) and the second data qubit as target (once more the lower-most line), according to another embodiment of the invention. Here, the ancilla qubit could be considered specialized so as to only act as a target during CNOT gates with either of the data qubits (i.e. not a control). However, as mentioned already above, a CNOT gate between a qubit as control and another qubit as target is equivalent to a controlled-Z gate with the control in the X basis ($C_X Z$ gate). Thus, the embodiment of figure 11 shows a method of performing a data-data controlled-X gate between the first data qubit as control in the Z basis and the second data qubit as target (i.e. a CNOT), wherein the ancilla qubit is configured to only be a control in the X basis in any controlled-unitary gate with either of the first and second data qubits (specifically here $C_X Z$ gates).

The ancilla is initially prepared in state $|0\rangle$. A Hadamard gate is performed on the first data qubit and another Hadamard gate is performed on the second data qubit. A first $C_X Z$ gate is then performed between the ancilla qubit as control and the first data qubit as target. A second $C_X Z$ gate is performed between the ancilla qubit as control and the second data qubit as target. As will be appreciated here, although it is a unitary-X gate to be applied on the second data qubit as a result of this circuit for performing data-data CNOT gate between the first data qubit and the second data qubit, the second $C_X Z$ gate actually results in a unitary-Z gate being applied to the second data qubit. However, it will be readily apparent that the quantum circuit of figure 11 comprises a sequence of one or more gates that (namely, at least the Hadamard gates applied to the first and second data qubits here), in combination with the unitary Z-gate of the ancilla-data controlled-unitary gate (i.e. from the second $C_X Z$ gate), performs the function of applying the desired unitary X-gate on the second data qubit.

A first measurement-based uncomputation is then performed by measuring the first data qubit in the X-basis (also known as an "MX operation"). A conditional correction operation (depending on the result of the MX operation) is an Z-gate and is applied on the first and second data qubits.

After the first measurement-based uncomputation, the first data qubit is prepared in state $|+\rangle$. A third $C_X Z$ gate is then performed between the ancilla qubit as control and the second data qubit as target.

A second measurement-based uncomputation is performed by measuring the ancilla qubit in the basis of *Z*. A conditional correction operation (depending on the result of the *Z* measurement) is a *X*-gate and is applied on the first data qubit.

Finally, a further Hadamard gate is performed on the first data qubit and yet another Hadamard gate is performed on the second data qubit.

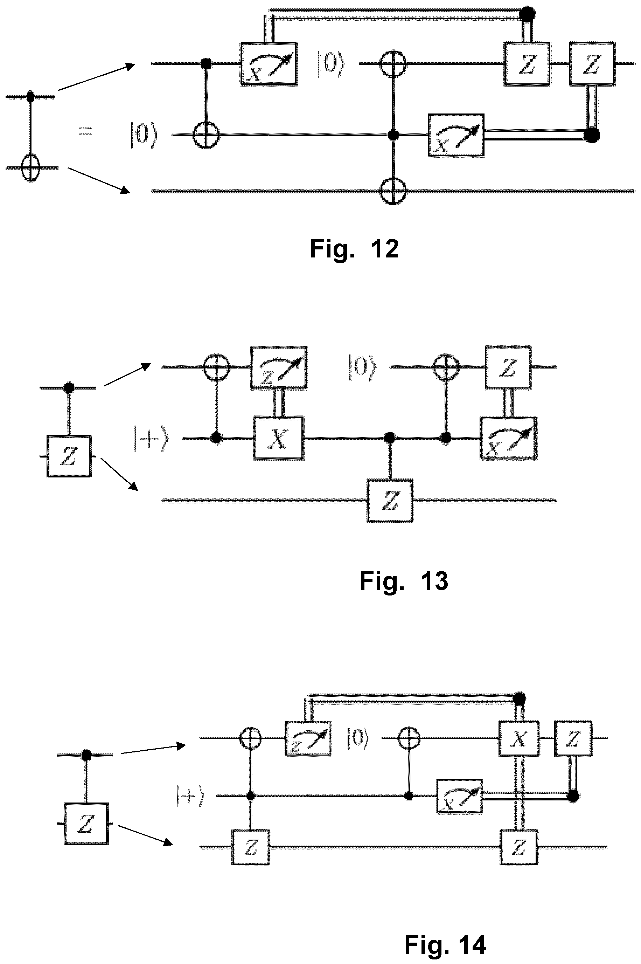

Figure 12 shows a quantum circuit diagram for performing a CX gate between the first data qubit (once more denoted by the upper-most line) and the second data qubit (once more denoted by the lower-most line), according to an embodiment of the invention. Here it is noted that the ancilla qubit is not specialized, as above.

Specifically, the ancilla is initially prepared in state $|0\rangle$. A first CNOT gate is then performed between the first data qubit as control and the ancilla as target.

A first measurement-based uncomputation is then performed by measuring the first data qubit in the X-basis. A conditional correction operation (depending on the result of the MX operation) is an Z-gate and is applied on the first data qubits.

After the first measurement-based uncomputation, the first data qubit is prepared in state $|0\rangle$. A second and third CNOT gate is performed simultaneously between the ancilla qubit as control and the two data qubits as targets, otherwise known as a multi-target CNOT gate or CXX. The present Inventor has recognized that in some architectures, it may not be possible to apply single CNOT gates separately with the ancilla as the control, which may typically come from a symmetrisation of the pulse (e.g. electromagnetic pulse) protocols that implements the gate in order to compensate for first order imperfections. Instead, the ancilla can only act as a target, or as the control solely in a CXX. The present invention thus enables the performance of a CNOT between the two data qubits coupled to the ancilla, without data-data connection and with the aforementioned restricted gate set available to the ancilla qubit.

A second measurement-based uncomputation is performed by measuring the ancilla qubit in the basis of *X*. A conditional correction operation (depending on the result of the *Y* measurement) is a *Z*-gate and is again applied on the first data qubit in this specific implementation.

Figures 13 and 14 show quantum circuit diagrams for performing a CZ gate between the first data qubit (once more denoted by the upper-most line) and the second data qubit (once more denoted by the lower-most line), according to various embodiments of the invention.

Referring to figure 13, the ancilla is initially prepared in state |+). A first CNOT gate is then performed between the ancilla qubit as control and the first data qubit as target.

A first measurement-based uncomputation is then performed by measuring the first data qubit in the *Z*-basis. A conditional correction operation (depending on the result of the MZ operation) is an *X*-gate and is applied on the ancilla qubit.

A CZ is performed between the ancilla qubit and the second data qubit.

After the first measurement-based uncomputation, the first data qubit is prepared in state $|0\rangle$. A second CNOT gate is then performed between the ancilla qubit as control and the first data qubit as target.

A second measurement-based uncomputation is performed by measuring the ancilla qubit in the basis of *X*. A conditional correction operation (depending on the result of the *X* measurement) is a *Z*-gate and is applied on the first data qubit.

Figure 14 shows a similar quantum circuit diagram to that of figure 13, but with the correction operations delayed. For instance, the conditional correction X-gate of the first measurement-based uncomputation is delayed until after the CZ and second CNOT, such that following the well-known commutation rules the conditional correction is instead an X-gate applied to the first and a Z-gate applied to the second data qubits. As will be appreciated, the corrections are so-called Pauli, whereas the two-qubit gates are so-called Clifford, so that whatever we do we will keep Pauli corrections (and multi qubits Pauli gates are always tensorial product of single qubit Pauli gate).

Furthermore, the CZ gate can be performed at any time between the step of preparing the ancilla qubit and the step of the second measurement-based uncomputation. Thus, as shown in figure 14, the CZ is shown occurring simultaneously with the first CNOT gate.

A particular beneficial application of the present invention is to apply a CNOT gate between two data cat qubits (e.g. stabilized via one or more of the above-described cat stabilization schemes), wherein the ancilla qubit is configured to only act as a control during a CNOT gate with either of the two data cat qubits. An example system could be that of figure 1 described above.

The ancilla qubit can be a discrete-level qubit such as a transmon or fluxonium, or it can be another cat qubit.

For instance, it is even more beneficial if the ancilla qubit is a resonant cat (stabilization scheme (g)) or moon cat (stabilization scheme (f)) or parametrically stabilized cat (stabilization scheme (a)) as this can straight forwardly be implemented by linearly coupling (e.g. via a capacitive bus) the memory resonator of the ancilla cat qubit to that of the data cat qubit, without needing to include the additional hardware or pumping schemes required to enable the ancilla cat qubit to act as a target during a CNOT. Thus, the overall circuit benefits from the potentially higher stability/quality afforded by these stabilization schemes.

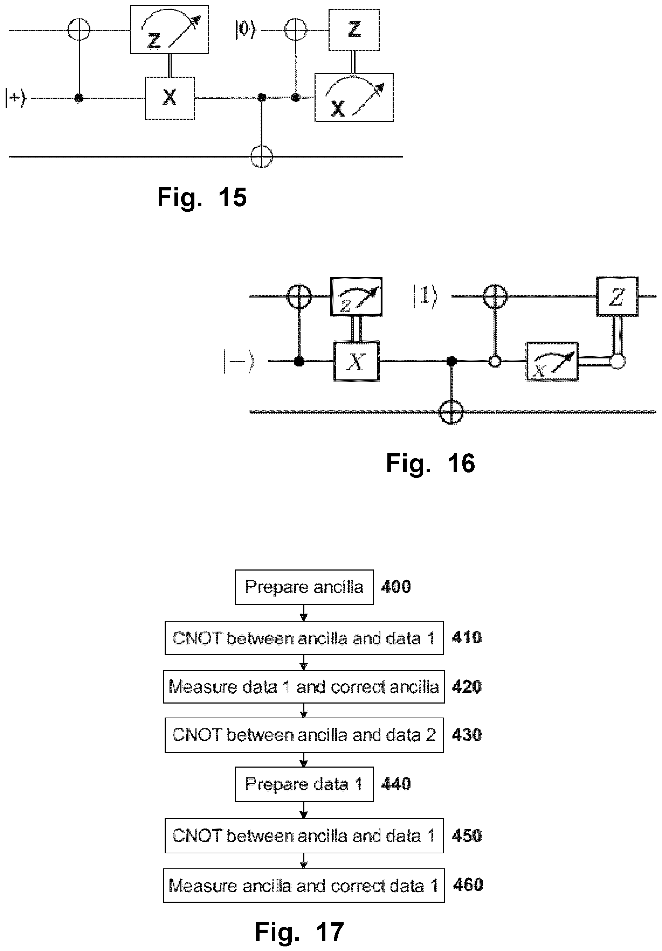

Figures 15 and 16 show two variants of a first embodiment wherein both the data qubits are cat qubits (and the ancilla qubit is preferably also a cat qubit). Figures 15 and 16 adopt the formalism of quantum gates operations and will readily be understood by the man skilled in the art. Figure 17 provides a general description of these two variants.

On figures 15 and 16, there are three lines. Each lines represents the operations performed on a given qubit. In the examples shown here, the result of this sequence of operations is a CNOT gate between a data qubit 1 and a data qubit 2, with the data qubit 1 being the control and the data qubit 2 being the target.

The operations performed on the data qubit 1 are shown on the top-most line of figures 15 and 16, whereas the operations performed on the data qubit 2 are shown on the lower-most line of figures 15 and 16. In between these two lines are shown the operations performed on an ancilla qubit. The data qubit 1, the ancilla qubit and the data qubit 2 need to be physically connected in order for this CNOT gate to be carried out. In the context of figure 1, it can be any triplet of two data qubits connected to the same ancilla qubit.

Figure 17 details the series of operations of figures 15 and 16.

In a first operation 400, the command circuit 4 prepares the ancilla qubit in a reference state. In the example of figure 15, this reference state is $|+\rangle$, whereas in the example of figure 16, this reference is $|-\rangle$. More generally speaking, the ancilla can be prepared in a state $e^{i\phi 1 Z}|+\rangle$ where $\phi 1$ is a phase comprised in the range $[0;\pi]$ and Z denotes the rotation is about the Z axis of the Bloch sphere of the cat qubit.

This reference state can be represented as a point in the complex Hilbert space and it serves as a reference point for the quantum operations that follow. The initialization process may involve cooling the qubit to its ground state to reduce thermal noise and applying a series of microwave pulses or other radiation controlled by the command circuit 4. These pulses are calibrated to manipulate the quantum state of the ancilla qubit without inducing decoherence or unwanted transitions in energy levels.

The state |+) is chosen for its stability and ease of preparation, but depending on the specific quantum algorithm or operation, the ancilla qubit could also be prepared in a superposition state or an entangled state with other qubits if required. The preparation step may also include error-checking protocols to ensure the ancilla qubit is in the correct state before proceeding to the next steps. This could involve a series of quantum error correction techniques, such as syndrome extraction and application of corrective operations, to mitigate any errors that may have occurred during the preparation phase.

Once the ancilla qubit is prepared, its quantum state is then used as a control in the subsequent CNOT operations, effectively entangling the state of the ancilla qubit with the states of data qubit 1 and data qubit 2. The precise preparation of the ancilla qubit is thus an important operation for the fidelity and success of the quantum gate operations that follow in the method.

Following operation 400, the method progresses to the execution of a CNOT gate between the ancilla qubit and the first data qubit, designated as data qubit 1. As shown on figures 15 and 16, in the examples shown here, the ancilla qubit is the control, and the data qubit 1 is the target.

The CNOT gate is implemented by applying a sequence of precisely timed microwave pulses or other forms of radiation that are controlled by the command circuit 4. These pulses are designed to interact with the qubits in such a way that the state of data qubit 1 is flipped conditional on the state of the ancilla qubit.

The success of this operation depends on the accurate timing and phase coherence of the pulses, as well as the isolation of the qubits from external noise sources that could cause decoherence. The command circuit 4 must also account for the specific resonance frequencies of the ancilla and data qubits to ensure that the pulses selectively interact with the intended qubits without affecting others in the superconducting quantum circuit 6.

Furthermore, depending on the type of ancilla qubit used, the CNOT operation may involve dynamic tuning of the qubit frequencies or of a tunable coupler to bring them into resonance for the interaction and then detuning them afterward to protect against unwanted interactions. This step may also include real-time feedback mechanisms to adjust the pulses based on the state of the qubits, ensuring high-fidelity gate operations.

After the CNOT gate of operation 410 has been performed, an operation 420 of conditional correction is performed. More precisely, a correction is executed on the ancilla qubit depending on the result of the value of the Z operator of data qubit 1. In order to do so, data qubit 1 is measured in the Z basis in operation 420, and, if this measurement returns the value -1, the ancilla qubit undergoes correction by applying a Pauli-X gate, as shown on figures 15 and 16. As above, in order to denote the conditionality of this correction, there is a double bar linking the MZ operation and the X correction.

Thereafter, another CNOT gate is performed in an operation 430. This time, this CNOT gate is performed between the ancilla qubit and the data qubit 2, with the ancilla qubit being the control, and the data qubit 1 being the target. This operation is very similar to operation 410.

At the same time as operation 430, or shortly before or after it, the data qubit 1 is prepared in a specific state in an operation 440, in order to receive the result of the CNOT gate of figures 15 to 17. This preparation is fairly similar to the preparation of the ancilla qubit of operation 400, except that the preparation state is $|0\rangle$ or $|1\rangle$. Figures 15 and 16 show the two variants of state $|0\rangle$ in the example of figure 15, and in a state $|1\rangle$ in the example of figure 16.

After the data qubit 1 is prepared in its reference state, a CNOT operation is again carried out in an operation 450. As shown on figures 15 and 16, this operation is very similar to operation 410, and the ancilla qubit is the control, whereas the data qubit 2 is the target. Explicitly however, if the data qubit 1 is prepared in a $|0\rangle$ state, then operation 450 requires performing a conventional CNOT. If data qubit 1 is prepared in a $|1\rangle$ state, then operation 450 instead requires performing a zero-controlled NOT gate, which is a CNOT gate with the control on zero.

For the avoidance of doubt, if data qubit 1 is prepared in a $|1\rangle$ state, the operations 440, 450, and 460 still performs a one-qubit state teleportation of the ancilla qubit to the data qubit 1 from the basis $(|0\rangle, |1\rangle)$ to the basis $(10), |1\rangle)$. Physically, a zero-controlled NOT gate can be applied between two cat qubits following a similar method as the conventional CNOT between two cat qubits.

Specifically, as will be known to the skilled person, a number of different mechanisms can be used to induce a CNOT gate between an ancilla qubit as control and a data cat qubit as target, as described in above. To apply then a zero-controlled NOT gate between two cat qubits, we apply the same protocols as those for the conventional gate described above, but with $\alpha$ and $-\alpha$ (the complex amplitudes of the coherent states which, superposed, provide the cat qubit states of the control qubit) are exchanged. Physically, this can be achieved by performing the relevant pumps and drives out of phase to those of the corresponding conventional CNOT. For instance, in embodiments such as described in EP23305298.4 filed by the Applicant on 06/03/2023, to induce a zero-controlled NOT gate between a data cat qubit (target) and a control qubit (preferably another cat qubit), the pump on the ATS of the target cat qubit at the frequency of the control cat qubit will be $\pi$ out of phase compared to the conventional CNOT formulation.

The inventor has discovered it to be preferable to do the former, namely prepare the data qubit 1 in a $|0\rangle$ state and subsequently perform the conventional CNOT in operation 450.

Finally, in an operation 460, a conditional correction is performed on the data qubit 1. This operation is similar to operation 420, except that here, in the example of figure 15, it is the X operator of the ancilla qubit which is measured, and, if the measurement in the X basis of the ancilla qubit returns the value -1, the data qubit 1 undergoes a correction by applying a Pauli Z-gate (also known as a phase-flip gate).

However, in the example of figure 16, if measurement in the X basis of the ancilla qubit returns the value +1, the data qubit 1 undergoes a correction by applying a Pauli Z-gate. This distinction is highlighted by the white circle between the conditional double lines shown on figure 16.

After all these operations, a CNOT gate has been performed between the data qubit 1 (as a control) and the data qubit 2 (as a target).

While this method may appear more complicated than merely applying a transverse CNOT operation between the data qubit 1 and the data qubit 2, it should be noted that this method allows to perform the CNOT operation without there being a direct physical connection between these two qubits. This is very advantageous as described above and is particularly for a cat-qubit architecture, as it may alleviate undesired couplings between the two data cat qubits by removing a direct connection or coupling mechanism therebetween, and further allows an optimal choice of cat stabilization scheme for the data cat qubits (e.g. such as dissipative stabilization scheme (a) above) and an optimal choice of architecture for the ancilla (such as a transmon for swift and high-fidelity CNOTs, or cat qubits stabilized such as in in schemes (f) and (g) above which require no additional microwave drives or pumps to act as a control during a CNOT)..

The Applicant continued his research, and discovered that the first embodiment can be further improved by providing correction stacking, thus reducing the number of quantum gates to be performed.

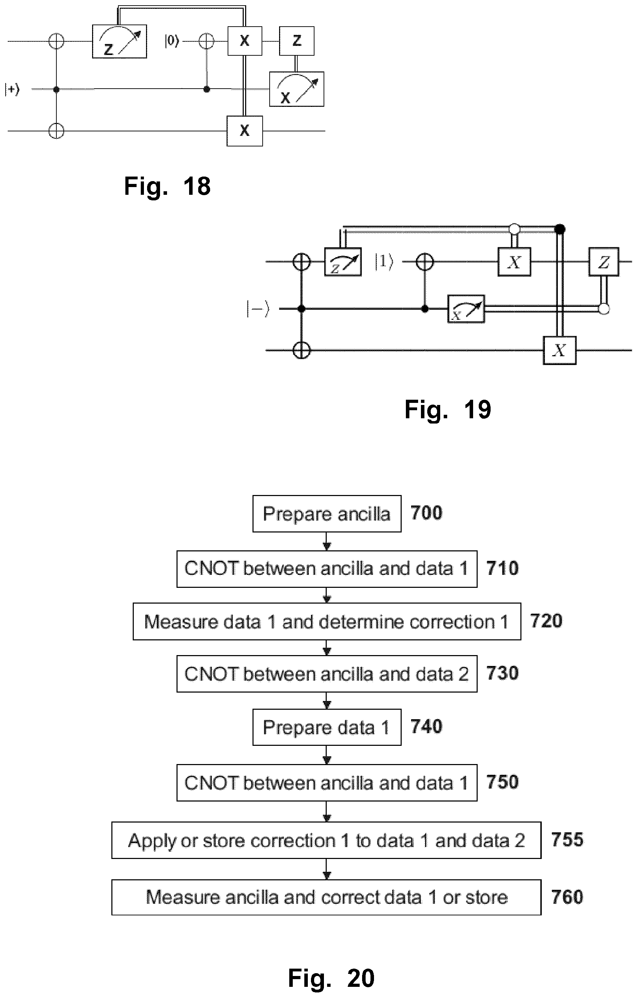

This method is shown with the second embodiment of figures 18 to 20. In figure 20, the operations which are similar to those of figure 17 have been given the same last two digits. For example, operation 400 and operation 700 are identical. For this reason, only the differences between these two series of operations will be described below.

A first difference lies in the moment for performing operations 720 and 730. While the example of figure 17 required operation 430 to be performed after operation 420, it is not the case anymore.

Indeed, operation 720 is slightly different from operation 420 in that the conditional correction is not performed on the ancilla, but on both the data qubit 1 and the data qubit 2. Furthermore, while the measurement has to be performed after operation 710 and before operation 740, the correction can be performed in an operation 755 at a later stage, after operation 750, and in a preferred manner, the correction is not physically carried out. Instead, a list of corrections to be performed on respectively the data qubit 1 and the data qubit 2 is maintained, and this list of operations is performed in a software manner when the final state of the data qubit 1 and the data qubit 2 are determined. Specifically, as described above in relation to the Pauli frame, the list of corrections to be performed can be tracked in classical software to change the sign of subsequent logical measurement outcomes on these qubits.

This allows to perform operations 710 and 730 very close to one another, or even simultaneously, as the Applicant has shown possible in application EP23305297. This allows to gain a lot of time and hence improves fidelity.

Another difference lies in operation 760, which may also be carried out in a software manner in a preferred embodiment.

For the avoidance of doubt, in figure 19, operation 755 shows applying (or storing to be applied) a correction to data qubit 1 and data qubit 2 depending on the result of the measure in operation 720. Here (denoted by the white circle in the conditional double lines) if the MZ on data qubit 1 is +1 an X correction is to be applied only to the data qubit 1, whereas if the MZ on data qubit 1 is -1 an X correction is to be applied only to the data qubit 1 (denoted by the black circle). Similarly, operation 760 comprises applying a Z correction if the result of the MX of the ancilla qubit is +1 (hence denoted by the white circle). It will be appreciated that understanding which Pauli corrections to apply, depending on when you want to apply them, is readily derivable by the skilled person.

When comparing the first embodiment and the second embodiment, it thus appears that the second embodiment can be carried out much faster, since operations 710 and 730 can be carried out simultaneously, and since the conditional correction operations can be skipped altogether by storing their value.

**Claims**

1. Method of performing a data-data controlled-unitary gate between a first data qubit as control in a first basis ($|e_0\rangle$, $|e_1\rangle$) and a second data qubit as target, and wherein the unitary gate of the controlled-unitary matrix is defined by a unitary matrix U, the method comprising the following operations:

   (i) providing the first data qubit in the first basis ($|e_0\rangle$, $|e_1\rangle$), the second data qubit, and an ancilla qubit, wherein each data qubit is connected to the ancilla qubit and wherein the first and second data qubits are not directly connected to each other, wherein the first data, second data, and ancilla qubits are all either (A) physical qubits each hosted in a respective physical mode of one or more physical resonators or (B) logical qubits each hosted by a plurality of physical qubits which are configured to perform an error correction code to encode the respective logical qubits;
   (ii) configuring the ancilla qubit to be able to perform a controlled-unitary gate with either of the first and second data qubits;

the method further comprising the following operations:

(iii) performing a first one-qubit state teleportation of the first data qubit to the ancilla qubit from the first basis ($|e_0\rangle$, $|e_1\rangle$) to a second basis ($|g_0\rangle$, $|g_1\rangle$) by: (a) preparing a two-qubit state entangling the first data qubit and the ancilla qubit, and (b) subsequently performing a measurement-based uncomputation of the first data qubit;

(iv) performing an ancilla-data controlled-unitary gate between the ancilla qubit as control in the second basis ($|g_0\rangle$, $|g_1\rangle$) and the second data qubit as target;

(vi) performing a second one-qubit state teleportation of the ancilla qubit to the first data qubit from the basis ($|g_0\rangle$, $|g_1\rangle$) to the basis ($|e_0\rangle$, $|e_1\rangle$) by: (a) preparing a second two-qubit state entangling the ancilla qubit and the first data qubit, and (b) subsequently performing a measurement-based uncomputation of the ancilla qubit;

wherein operation (iv) is performed at any time before operation (vi)(b), operation (vi)(a) is performed after operation (iii)(b), and wherein (I) the unitary gate of the ancilla-data controlled-unitary gate is defined by the unitary matrix $U$, or (II) the unitary gate of the ancilla-data controlled-unitary gate is defined by another unitary matrix $V$ and the method comprises a sequence of one or more gates that, in combination with the unitary $V$-gate of the ancilla-data controlled-unitary gate, performs the function of applying the unitary $U$-gate on the second data qubit.

2. The method of claim 1, wherein operation (ii) comprises configuring the ancilla qubit to only be a control in a second basis ($|g_0\rangle$, $|g_1\rangle$) in any controlled-unitary gate with either of the first and second data qubits.

3. Method according to claims 1 or 2, wherein the controlled-unitary gate to be performed between the first data qubit and the second data qubit is a CNOT gate between the first data qubit as control having a first data qubit resonance frequency and the second data qubit as target having a second data qubit resonance frequency,

in which said first data qubit and said second data qubit are cat qubits hosted respectively in a first data resonator and in a second data resonator of a superconducting quantum circuit, and are stabilized therein by means of a command circuit arranged for selectively applying radiation to said superconducting quantum circuit, and
in which said first data resonator and said second data resonator are connected only via an ancilla resonator coupled to said command circuit for stabilizing the respective ancilla qubit having an ancilla qubit resonance frequency,
said method comprising the following operations:

(I) as a first step in operation (iii)(a), preparing (400, 700) the ancilla qubit in a state $e^{i\phi_1 Z}|+\rangle$ where $\Phi_1$ is a phase comprised in the range $[0;\pi]$,

(II) as a second step in operation (iii)(a), performing a CNOT gate (410, 710) between said first data qubit and said ancilla qubit, with the first data qubit being the target and the ancilla qubit being the control,

(III) performing operation (iv) by performing a CNOT gate (430, 730) between said second data qubit and said ancilla qubit, with the second data qubit being the target and the ancilla qubit being the control,

(IV) as a first step in operation (vi)(a), preparing (440, 740) the control qubit in a state $|0\rangle$ or 11),

(V) as a second step in operation (vi)(a), performing a CNOT gate (450, 750) between said first data qubit and said ancilla qubit if the control qubit was prepared in $|0\rangle$, with the first data qubit being the target and the ancilla qubit being the control or preforming a zero-controlled NOT gate (450, 750) between said first data qubit and said ancilla qubit if the control qubit was prepared in $|1\rangle$,

(VI) performing operation (iii)(b) by performing an MZ operation (420, 720) on said first data qubit,

(VII) deriving a corrective quantum X gate to be performed depending on the result of operation (VI),

(VIII) performing operation (vi)(b) by performing a measurement in the basis $\{e^{i\phi_1 Z}|+\rangle, e^{i\phi_1 Z}|-\rangle\}$ (460, 760) on said ancilla qubit,

(IX) deriving a corrective quantum Z gate to be performed depending on the result of operation (VIII),

wherein operation (I) is performed before all other operations, operation (VI) is performed after operation (II), operation (IV) is performed after operation (VI), operation (V) is performed after operation (IV), and operation (VIII) is performed after operation (V).

4. Method according to claim 3, wherein operation (I) comprises preparing ancilla qubit in a state $|+\rangle$ or $|-\rangle$, operation (VIII) comprises performing an MX operation (460, 760) on said ancilla qubit, and operation (IV) comprises preparing (440, 740) the control qubit in a state $|0\rangle$.

5. Method according to claims 3 or 4, in which operations (II) and (III) are performed successively or simultaneously, and in which operation (VII) further comprises storing (755) a quantum X gate to be applied in post-processing to said first data qubit and/or said second data qubit and/or said ancilla qubit.

6.  Method according to claims 3 or 4, in which operation (VI) is performed before operation (III), and operation (VII) further comprises applying a quantum X gate (420) to said ancilla qubit if operation (VI) determines that a corrective quantum X gate is to be applied.

7.  Method according to one of claims 3 to 6, in which operation (IX) further comprises storing (760) a quantum Z gate to be applied in post-processing to said first data qubit.

8.  Method according to one of claims 3 to 6, in which operation (IX) further comprises applying a quantum Z gate (460) to said control qubit if operation (VI) determines that a corrective quantum X gate is to be applied.

9.  A quantum system comprising:

   a plurality of physical resonators; and
   a command circuit for sending control signals to the physical resonators to stabilize a first data qubit, a second data qubit, and an ancilla qubit, wherein each data qubit is connected to the ancilla qubit and wherein the first and second data qubits are not directly connected to each other, wherein the first data, second data, and ancilla qubits are all either (A) physical qubits each hosted in a respective physical mode of one or more of the plurality of physical resonators or (B) logical qubits each hosted by a plurality of physical qubits which are configured to perform an error correction code to encode the respective logical qubits;
   wherein the command circuit is further configured to perform the method of any of the preceding claims.

10. A computer program product compri sing instructions which cause the quantum system of claim 9 to carry out the operations of the method of any one of claims 1 to 8.

11. A computer-readable medium having stored thereon the computer program product of claim 10.

(Prior Art)

**Fig. 1**

**Fig. 2**

300

Prepare ancilla

302

Perform a one-qubit teleportation from the first (control) data on basis $(|e_0\rangle, |e_1\rangle)$ to the ancilla on basis $(|g_0\rangle, |g_1\rangle)$

$=$

310

Prepare a two-qubit state entangling first data and ancilla

$+$

320

Perform a measurement-based uncomputation of first data

304

Perform a controlled-U, in basis $(|g_0\rangle, |g_1\rangle)$, from the ancilla as control to the second (target) data

306

Prepare first data

308

Perform a one-qubit teleportation from the ancilla to the first (control) data ending in basis $(|e_0\rangle, |e_1\rangle)$

$=$

350

Prepapre a two-qubit state entangling the ancilla and the first data

$+$

360

Perform a measurement-based uncomputation of ancilla

**Fig. 3**

$\alpha \left|0\right\rangle + \beta \left|1\right\rangle$ ———•——— $\Big\}$ $\alpha \left|0\right\rangle \left|0\right\rangle + \beta \left|1\right\rangle \left|1\right\rangle$

$\left|0\right\rangle$ ———⊕———

$\alpha \left|+\right\rangle + \beta \left|-\right\rangle$ ———⊕——— $\Big\}$ $\alpha \left|+\right\rangle \left|+\right\rangle + \beta \left|-\right\rangle \left|-\right\rangle$

$\left|+\right\rangle$ ———•———

$\alpha \left|0\right\rangle + \beta \left|1\right\rangle$ ———•——— $\Big\}$ $\alpha \left|0\right\rangle \left|+\right\rangle + \beta \left|1\right\rangle \left|-\right\rangle$

$\left|+\right\rangle$ ——[ $Z$ ]——

$\alpha \left|0\right\rangle + \beta \left|1\right\rangle$ ——•——[ $H$ ]——[ $T$ ]—— $\Big\}$ $\alpha \left|T\right\rangle \left|0\right\rangle + \beta \left|-T\right\rangle \left|1\right\rangle$

$\left|0\right\rangle$ ——⊕——

**Fig. 4**

$\left|\psi\right\rangle$ ——•——[⟋$X$]—— $\quad$ $\left|\psi\right\rangle$ ——⊕——[⟋$Z$]—— $\quad$ $\left|\psi\right\rangle$ ——•——[⟋$X$]——

$\left|0\right\rangle$ ——⊕——[ $Z$ ]—— $\left|\psi\right\rangle$ $\quad$ $\left|+\right\rangle$ ——•——[ $X$ ]—— $\left|\psi\right\rangle$ $\quad$ $\left|+\right\rangle$ —[ $Z$ ]—[ $X$ ]— $\left|\psi\right\rangle$

**Fig. 5**

$V\left|0\right\rangle$ ——⊕——[ $ZV^{\dagger}$ ]—— $\left|\psi\right\rangle$ $\quad$ —•—— $=$ —[ $U^{\dagger}$ ]—•—[ $U$ ]—

$\left|\psi\right\rangle$ ——•——[⟋]—— $\qquad$ —⊕—— $\qquad$ —[ $V^{\dagger}$ ]—⊕—[ $V$ ]—

$UXU^{\dagger}$

**Fig. 6**

Fig. 7

Fig. 8

**Fig. 9**

**Fig. 10**

**Fig. 11**

EP 4 769 237 A1

Fig. 12

Fig. 13

Fig. 14

Fig. 15

Fig. 16

| Prepare ancilla | 400 |
| CNOT between ancilla and data 1 | 410 |
| Measure data 1 and correct ancilla | 420 |
| CNOT between ancilla and data 2 | 430 |
| Prepare data 1 | 440 |
| CNOT between ancilla and data 1 | 450 |
| Measure ancilla and correct data 1 | 460 |

Fig. 17

Fig. 18

Fig. 19

| Prepare ancilla | 700 |
| CNOT between ancilla and data 1 | 710 |
| Measure data 1 and determine correction 1 | 720 |
| CNOT between ancilla and data 2 | 730 |
| Prepare data 1 | 740 |
| CNOT between ancilla and data 1 | 750 |
| Apply or store correction 1 to data 1 and data 2 | 755 |
| Measure ancilla and correct data 1 or store | 760 |

Fig. 20

Europäisches
Patentamt

European
Patent Office

Office européen
des brevets

## EUROPEAN SEARCH REPORT

**Application Number**

EP 24 30 7322

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHOU X ET AL: "Methodology for quantum logic gate constructions", PHYSICAL REVIEW, A. GENERAL PHYSICS, AMERICAN INSTITUTE OF PHYSICS. NEW YORK, US, vol. 62, 1 November 2000 (2000-11-01), pages 1-17, XP002982092, ISSN: 0556-2791 | 1,2,9-11 | INV. G06N10/20 G06N10/40 G06N10/70 |
| A | * Sections I-VI; Appendices A-C; figure Equation (36) * ----- | 3-8 | |
| A | EP 4 428 767 A1 (ALICE & BOB [FR]) 11 September 2024 (2024-09-11) * page 2 - page 13; figure 2 * ----- | 1-11 | |
| | | | **TECHNICAL FIELDS SEARCHED (IPC)** |
| | | | G06N |

The present search report has been drawn up for all claims

| Place of search | Date of completion of the search | Examiner |
|---|---|---|
| The Hague | 19 June 2025 | Klasen, TJ |

EPO FORM 1503 03.82 (P04C01)

## ANNEX TO THE EUROPEAN SEARCH REPORT
## ON EUROPEAN PATENT APPLICATION NO.

EP 24 30 7322

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2025

| Patent document cited in search report | Publication date | Patent family member(s) | Publication date |
|---|---|---|---|
| EP 4428767 A1 | 11-09-2024 | EP 4428767 A1 | 11-09-2024 |
| | | WO 2024184406 A1 | 12-09-2024 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 23175147
- EP 23307437
- EP 23305298
- EP 23305297 A

### Non-patent literature cited in the description

- **GOUZIEN, ÉLIE et al.** Performance analysis of a repetition cat code architecture: Computing 256-bit elliptic curve logarithm in 9 hours with 126 133 cat qubits. *Physical Review Letters*, 2023, vol. 131.4, 040602
- **PUTTERMAN, HARALD et al.** Hardware-efficient quantum error correction using concatenated bosonic qubits.. *arXiv preprint arXiv:2409.13025*, 2024
- **GUILLAUD, JÉRÉMIE ; MAZYAR MIRRAHIMI**. Repetition cat qubits for fault-tolerant quantum computation. *Physical Review*, 2019, vol. X9.4, 041053
- **RUIZ, DIEGO et al.** LDPC-cat codes for low-overhead quantum computing in 2D.. *arXiv preprint arXiv:2401.09541*, 2024